# EUROPÄISCHE PATENTSCHRIFT

(11) **EP 0 475 887 B1**
(45) Veröffentlichungstag und Bekanntmachung des Hinweises auf die Patenterteilung: **21.09.1994**
(21) Anmeldenummer: 91810597.4
(22) Anmeldetag: 25.07.1991
(51) Int. Cl.: B32B 27/36, B32B 27/08, B65D 65/40

(54) **Mehrschichtiger Kunststoffverbund**
Multilayered resin composite
Composé multicouche en matières plastiques

(30) Priorität: 17.08.1990 CH 2680/90; 19.04.1991 CH 1178/91
(43) Veröffentlichungstag der Anmeldung: 18.03.1992
(73) Patentinhaber: ALUSUISSE-LONZA SERVICES AG, 8034 Zürich (CH)
(72) Erfinder: Schneider, Karl, CH-9244 Niederuzwil (CH); Deutsch, Jürg, CH-6052 Hergiswil (CH)

(56) Entgegenhaltungen:
- EP-A- 0 257 691
- EP-A- 0 266 116

## Beschreibung

Die Erfindung betrifft einen mehrschichtigen Kunststoffverbund für Verpackungen, die Verwendung desselben, Behälterabdeckungen aus dem mehrschichtigen Kunststoffverbund und ein Verfahren zum Verschliessen von Behältern.

Es ist bekannt, Behälterabdeckungen, beispielsweise Deckel für Behälter die zur Aufnahme von Nahrungs- und Genussmitteln vorgesehen sind, aus Verbunden herzustellen. Bekannte Verbunde, die zu solchen Deckeln weiterverarbeitet werden, enthalten in der Regel eine Deck- oder Zwischenschicht aus Aluminium, die wenigstens einseitig mit einer Siegelschicht versehen ist. Ueber diese Siegelschicht wird der Deckel mit dem zu verschliessenden Behälter dicht verschlossen.

Da insbesondere die Gewinnung von Aluminium sehr energie-intensiv ist und sich deshalb dessen Einsatz für Einmalgebrauch-Anwendungen mehr und mehr ausschliesst, wurde versucht, das Aluminium durch Kunststoffschichten zu ersetzen.

Beispielsweise ist aus der Druckschrift "Interpack 1990, Valox PKG 1530 für die Milchwirtschaft und für Deckelanwendungen, GE Plastics Europe, Verpackungen Mai 1990", ein Aluminium-Ersatz bekannt, der einen 3-Schicht-Aufbau darstellt. Der beschriebene Aufbau besteht aus einer ersten, 20 µm dicken Schicht "Valox PKG 1530", einer Polyester-Mischung, einer zweiten 90 µm dicken Schicht "HIPS", einem Polystyrol, und einer dritten Schicht, welche die Siegelschicht darstellt und 10 µm dick sein soll. Diesen Verbunden haftet z.B. der Nachteil an, nur in engen Temperatur-und Druckbereichen siegelbar zu sein. Bei der praktischen Anwendung solcher bekannter 3-Schicht-Konzepte tritt beim Entfernen des aufgesiegelten Deckels vom Behälter, entlang des Siegelbandes meist eine Delamination des Deckels ein, was sich in unschön und unästhetisch präsentierenden Behälterränden ausdrückt. Am Behälterrand verbleiben nämlich Reste der Deckel-Kunststoffschichten. Im weiteren reisst ein derart delaminierter Deckel leicht ein und lässt sich dann nicht mehr vollständig und in einem Stück vom Behälter entfernen (peeling). Dieser Nachteil tritt bei grossflächigen Deckeln noch vermehrt ein.

Aufgabe vorliegender Erfindung ist es, einen mehrschichtigen Kunststoffverbund zur Verfügung zu stellen, der u.a. für Deckelanwendungen für Behälter geeignet ist und sich beispielsweise daraus hergestellte Deckel ohne Delamination und Einreissen von den Behältern, auf die sie aufgesiegelt sind, entfernen lassen (peelen). Darüberhinaus soll das Deckelmaterial leicht stoffrezyklierbar sein.

Erfindungsgemäss wird das durch einen mehrschichtigen Kunststoffverbund erreicht, enthaltend von aussen nach innen die Schichten
a) eine Folie in einer Dicke von 8 bis 40 µm, enthaltend einen Thermoplasten auf Ester-Basis,
b) eine Folie in einer Dicke von 20 bis 250 µm, enthaltend einen Thermoplasten auf Styrol-Basis,
c) eine Folie in einer Dicke von 8 bis 40 µm, enthaltend einen Thermoplasten auf Ester-Basis, und
d) eine Siegelschicht in einer Dicke von 5 bis 30 µm, enthaltend einen polystyrolhaltigen Thermoplasten.

Mit "aussen" wird die Seite des Verbundlaminates bezeichnet, welche die Aussenseite eines Behälters, resp. eines Deckels bildet, während sinngemäss mit "innen" die Seite des Verbundlaminates bezeichnet ist, die gegen die Behälterinnenseite und das Füllgut gerichtet ist.

Die Folie, welche die Schicht a) bildet, hat zweckmässig eine Dicke von 10 bis 30 µm und bevorzugt eine Dicke von 10 bis 20 µm.

Die Folie, welche die Schicht a) bildet, enthält einen Thermoplasten auf Ester-Basis.

Thermoplaste auf Ester-Basis sind beispielsweise Polyalkylenterephthalate oder Polyalkylenisophthalate mit Alkylengruppen oder -resten mit 2 bis etwa 10 Kohlenstoffatomen oder Alkylengruppen mit 2 bis 10 C-Atomen, die wenigstens mit einem -O- unterbrochen sind, wie z.B. Polyethylenterephthalat, Polypropylenterephthalat, Polybutylenterephthalat (Polytetramethylenterephthalat), Polydecamethylenterephthalat oder Poly-1,4-cyclohexyldimethylolterephthalat, oder Polyalkylenterephtalat- und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe.

Zweckmässig sind die Thermoplaste auf Ester-Basis Polyalkylenterephthalate mit Alkylengruppen oder -resten mit 2 bis 10 Kohlenstoffatomen und Polyalkylenterephthalate, mit Alkylengruppen oder -resten mit 2 bis 10 Kohlenstoffatomen, die mit ein oder zwei -O- unterbrochen sind.

Bevorzugt sind die Thermoplaste auf Ester-Basis Polyalkylenterephthalate mit Alkylengruppen oder -resten mit 2 bis 4 Kohlenstoffatomen und ganz besonders bevorzugt sind Polybutylenterephthalate.

Weiters bevorzugt sind Polyalkylenterephthalate mit Alkylengruppen oder -resten mit 2 bis 4 Kohlenstoffatomen, die mit einem -O- unterbrochen sind.

Die Thermoplaste auf Ester-Basis können für sich oder in Mischung mit anderen Polymeren zu den entsprechenden Folien verarbeitet werden.

In einer ganz besonders bevorzugten Ausführungsform enthält die Folie der Schicht a) Polybutylenterephtalat und ein Copolymer aus Styrol und Maleinsäureanhydrid. Das Verhältnis von Polybutylenterephtalat zu Copolymer kann beispielsweise von 6 zu 4 bis 9 zu 1 Gew.-Teilen betragen, wobei ein Verhältnis von 8 zu 2 bis 8,5 zu 1,5 Gew.-Teilen zu bevorzugen ist.

Die Folie der Schicht a) kann die an sich üblichen Additive, wie z.B. Weichmacher Gleitmittel, Füllstoffe oder Antioxidation, enthalten.

Die Folie, welche die Schicht b) bildet, hat zweckmässig eine Dicke von 80 bis 220 µm, bevorzugt eine Dicke von entweder 80 bis 100 µm oder 160 bis 220 µm. Letztere Masszahlen richten sich nach der gewünschten Steifigkeit des Deckels.

Folien der Stärke von 80 bis 100 µm für die Schicht b) sind z.B. bevorzugt für die Herstellung von Flachdeckeln, wie sie für den Einmalverschluss von Behältern geeignet sind.

Folien der Stärke von 160 bis 220 µm oder bevorzugt von 180 bis 200 µm, für die Schicht b), sind z.B. bevorzugt für die Herstellung von verformten, d.h. beispielsweise getieften oder tiefgezogenen Deckeln. Solche verformten Deckel sind für eine Mehrfachverwendung geeignet. Die Deckel können in an sich bekannter Weise auf den Behälter aufgesiegelt werden und bilden somit auch einen Originalitätsverschluss. Beim ersten Oeffnen des Verpackungsbehälters wird im Bereiche der Siegelnaht der Deckel vom Behälter getrennt (peeling). Durch die Formgebung und die Materialstärke sind dann die Deckel wieder ein oder mehrfach auf den Behälter aufsetzbar, gegebenenfalls auch einrastbar, und damit wiederverschliessbar, dies jedoch ohne Siegelung.

Die Folie, welche die Schicht b) bildet, enthält einen Thermoplasten auf Styrol-Basis. Beispiele für Thermoplaste auf Styrol-Basis sind Polystyrol, Co- und Terpolymerisate davon, Copolymerisate mit Acrylnitril (SAN), Copolymerisate mit Butadien (SB) und Terpolymerisate, die Synthesekautschuke und Acrylnitril enthalten (ABS).

Zweckmässige Thermoplaste auf Styrol-Basis sind Polystyrol und Copolymere aus Styrol und Butadien. Derartige Copolymere aus Styrol und Butadien können beispielsweise einen Styrolanteil von 70 bis 90 Mol-% und zweckmässig von 75 bis 85 Mol-% aufweisen.

Die Folie, welche die Schicht c) bildet, hat zweckmässig eine Dicke von 10 bis 30 µm und bevorzugt eine Dicke von 10 bis 15 µm.

Die Folie, welche die Schicht c) bildet, enthält Thermoplaste auf Ester-Basis.

Entsprechende Werkstoffe sind der vorstehenden Auflistung über Thermoplaste auf Ester-Basis für die Folien der Schicht a) zu entnehmen.

Entsprechend gelten die zweckmässigen und bevorzugten Ausführungsformen wie für a) genannt auch für c).

Die Schicht d) ist eine Siegelschicht oder siegelfähige Schicht. Die Dicke der Siegelschicht kann zweckmässig 8 bis 20 µm und bevorzugt 8 bis 15 µm betragen.

Die Schicht d) des Kunststoffverbundes soll nicht nur die Siegelung sicherstellen, sondern kann darüberhinaus auch die Peelbarkeit des Deckels vom Behälter beim Oeffnen massgeblich beeinflussen.

Die Siegelschicht kann demzufolge auch eine geeignete Peelschicht (Aufreissschicht) darstellen.

Zweckmässig enthält die Siegelschicht als polystyrolhaltigen Thermoplasten z.B. Polystyrol, Co- oder Terpolymerisate davon, Copolymerisate mit Acrylnitril, Copolymerisate mit ungesättigten Kohlenwasserstoffen mit 2 bis 10 C-Atomen und wenigstens einer Doppelbindung, wie z.B. Isopren oder Butadien, oder Terpolymerisate, die Synthesekautschuke und Acrylnitril enthalten oder, besonders bevorzugt, Copolymerisate aus Styrol und Butadien.

Eine bevorzugte Ausführungsform liegt in der Verwendung von Siegelschichten, enthaltend polystyrolhaltige Thermoplasten in Mischung mit dem jeweiligen Werkstoff der die Folie der Schicht c) bildet.

Entsprechend ist es auch möglich, dem Werkstoff der Schicht c) die polystyrolhaltigen Thermoplasten der Siegelschicht d) zuzumischen.

Mit diesen Massnahmen kann eine anwendungsbezogene Verbundhaftung zwischen der Schicht c) und der Siegelschicht d) erzielt werden. Sinngemäss lässt sich diese Massnahme auch auf die Schichten a) und b) anwenden.

Zur Herstellung von Folien für die Schicht b) können auch rezyklierte Thermoplaste auf Styrol-Basis eingesetzt werden. Beispielsweise aus Polystyrol-haltigen Abfällen kann ein Regranulat oder rezykliertes Material hergestellt werden, das, gegebenenfalls in verschiedenen Mengenanteilen mit neuem Material, enthaltend Thermoplaste auf Styrol-Basis, gemischt, zu den entsprechenden Folien verarbeitet wird.

Beispielsweise können Folien für die Schicht b) nur aus rezyklierten Thermoplasten gefertigt werden. Insbesondere beträgt der Anteil an rezykliertem Material in den Thermoplasten auf Styrol-Basis beispielsweise 0 bis 90 Gew.-%, zweckmässig 0 bis 60 Gew.-% und bevorzugt 0 bis 30 Gew.-%, jeweils bezogen auf das Gesamtgewicht der Folie der Schicht b).

Die untere Grenze für den Anteil an rezykliertem Material ist unkritisch, in der Regel kann die Untergrenze auf beispielsweise wenigstens 5 Gew.-%, zweckmässig wenigstens 10 Gew.-% und bevorzugt wenigstens 20 Gew.-%, jeweils bezogen auf das Gesamtgewicht der Folie der Schicht b), festgelegt werden.

Besonders bevorzugt ist ein mehrschichtiger Kunststoffverbund enthaltend von aussen nach innen die Schichten
a) eine Folie in einer Dicke von 10 bis 15 µm enthaltend als Werkstoff Polybutylenterephtalat und ein Copolymer aus Styrol und Maleinsäureanhydrid,
b) eine Folie in einer Dicke von 80 bis 100 µm, bzw. von 180 bis 200 µm, enthaltend als Werkstoff ein Copolymer aus Styrol und Butadien,
c) eine Folie in einer Dicke von 10 bis 15 µm enthaltend als Werkstoff Polybutylenterephtalat und ein Copolymer aus Styrol und Maleinsäureanhydrid, und
d) eine Siegelschicht in einer Dicke von 8 bis 15 µm enthaltend als Werkstoff Copolymerisate aus Styrol und Butadien.

Die einzelnen Schichten können auf an sich bekannte Weise durch Coextrudieren miteinander verbunden werden.

Zwischen einzelnen, mehreren oder allen Schichten können dabei Haftvermittler, wie sie der Fachwelt an sich bekannt sind, eingesetzt werden.

Geeignete Haftvermittler sind beispielsweise Nitrilkautschuk-Phenolharze, Epoxide, Acrylnitril-Butadienkautschuk, urethanmodifizierte Acryle, Heissschmelzpolyester, mit Heissschmelzpolyester vernetzte Polyisocyanate, Polyisobutylenmodifizierte Styrol-Butadienkautschuke, Polyurethane, Ethylen-Acrylsäure-Mischpolymere und Ethylenvinylacetat-Mischpolymere.

Besonders bevorzugt sind die Polyurethane.

In der Regel wird eine Schichtdicke des Haftvermittlers von 1 bis 12 µm und bevorzugt von 2 bis 9 µm eingehalten. Anstelle der Schichtdicke lässt sich die Menge desHaftvermittlers zwischen den Thermoplast-Schichten durch die Menge des Haftvermittlers ausdrücken. Beispielsweise liegt die Menge bei 1,2 bis 14 g/m², zweckmässig bei 1,5 bis 9 g/m² und bevorzugt bei 1,5 bis 5 g/m².

Die erfindungsgemässen mehrschichtigen Kunststoffverbunde werden als Verpackungsmaterial verwendet.

Bevorzugt wird der erfindungsgemässe Kunststoffverbund als Deckelmaterial für behälterförmig ausgestaltete Formkörper verwendet.

Das Material kann als Flachmaterial z.B. in Form von Bögen oder Rollen, als Stanzlinge oder als verformtes Material, beispielsweise getieft oder tiefgezogen, bereits in Deckelform vorliegen.

Mit behälterförmig ausgestalteten Formkörpern sind beispielsweise spritzgegossene oder insbesondere tiefgezogene Formkörper umfasst. Die Formkörper können z.B. Flaschen, Schalen, Becher oder Röhren mit in der Draufsicht rundem, ovalem, eckigem oder gerundet eckigem querschnitt sein, die insbesondere eine oder mehrere Siegelkanten oder Siegelflächen aufweisen.

Sind die Formkörper in Form von Röhren, kann sinngemäss der erfindungsgemässe Kunststoffverbund ein- oder beidendig als Deckelmaterial Verwendung finden.

Der erfindungsgemässe Kunststoffverbund wird bevorzugt als Deckel für tiefgezogene Behälter verwendet. Der Kunststoffverbund kann z.B. in Bahnform auf die zu verschliessenden Behälter gebracht, angesiegelt und im wesentlichen dem Umfange des Behälters entsprechend perforiert oder ausgeschnitten werden oder aus dem bahnförmigen Verbundlaminat können Deckel dem Behälterrand entsprechend ausgeschnitten resp. ausgestanzt, gegebenenfalls geformt, und aufgesiegelt werden.

Die Deckel aus dem erfindungsgemässen Kunststoffverbund sind in hohem Masse Reiss- und Einreissbeständig. Deshalb ist es möglich, gebrauchstüchtige Deckel auch grösserer Abmessungen, beispielsweise bis zu 1000 cm², zweckmässig bis zu 800 cm² und bevorzugt bis zu 500 cm² herzustellen und zu verarbeiten.

Der erfindungsgemässe Kunststoffverbund kann ein- oder beidseitig wenigstens eine Schwächung oder Schwächungslinie, beispielsweise in Form einer Stauchung, Einkerbung oder eines Schnittes, aufweisen.

Solche Schwächungen oder Schwächungslinien können insbesondere an Deckelmaterialien, Behälterabdeckungen oder Deckeln angebracht sein. Zweckmässig sind solche Schwächungen oder Schwächungslinien an Deckelmaterialien, Behälterabdeckungen oder Deckeln über, parallel, in beliebigen Abständen oder in bestimmten Abständen parallel zur vorgesehenen Siegellinie oder Verbindungslinie angebracht.

Die Schwächungen oder Schwächungslinien liegen zweckmässig innerhalb und(oder ausserhalb und bevorzugt innerhalb der durch den Behälterinnenraum begrenzten Deckelfläche.

Die Schwächungen oder Schwächungslinien können den ganzen Deckelumfang betreffen oder nur Teile davon.

Bevorzugt sind Schwächungen auf der Innenseite des Deckels, innerhalb der durch den Behälterinnenraum begrenzten Deckelfläche, parallel zu der vorgesehenen Siegellinie und über den ganzen Deckelumfang.

Die Schwächungen in Form von beispielsweise Stauchungen, Einkerbungen oder Schnitten können durch Prägen, Drücken, Kerben, Stanzen, Abrollen oder Schneiden z.B. an flächigem, bandförmigem oder zu Deckeln vorbereiteten Kunststoffverbund angebracht werden. Die Schwächungen oder Schwächungslinien am erfindungsgemässen Kunststoffverbund und insbesondere an den Deckelmaterialien können von der Aussenseite, der Innenseite oder von beiden Seiten her vorgenommen werden. Bevorzugt sind Schwächungen oder Schwächungslinien angebracht von der Innenseite her.

Die Schwächungen oder Schwächungslinien können wenigstens eine Schicht des erfindungsgemässen Kunststoffverbundes betreffen. Es ist beispielsweise möglich, dass die Schwächung eine, zwei oder drei der Schichten betrifft. Bevorzugt ist dabei die Schwächung von einer oder zwei Schichten.Die Schwächung kann z.B. eine Kerbung bevorzugt der ersten oder ersten und zweiten Schicht darstellen. Die Schwächung kann z.B. auch eine Kerbung der ersten und eine Stauchung der zweiten Schicht oder eine Kerbung der ersten und zweiten und eine Stauchung der dritten Schicht darstellen. Bevorzugt ist eine Schwächung von der Innenseite her.

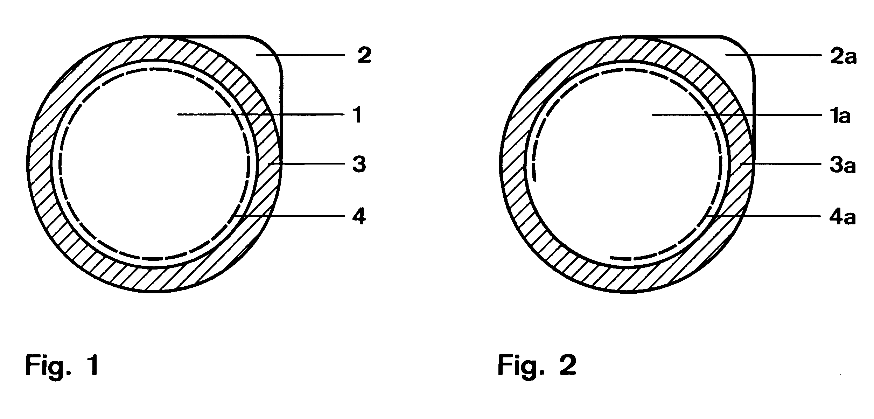

Die Figuren 1 und 2 zeigen beispielhaft jeweils eine Behälterabdeckung von der Unterseite, d.h. der dem Behälter zugewandten Seite.

Figur 1 stellt ein Beispiel eines Deckels (1) dar, der eine Aufreisslasche (2) enthält und über die schraffierte Siegellinie (3) mit dem Behälter verbunden wird. Parallel in kleinem Abstand zur Siegellinie (3) ist eine Schwächung (4) durch eine unterbrochene Linie angedeutet. Diese Schwächung kann beispielsweise eine Kerbung oder Stauchung der ersten oder ersten beiden Schichten des Deckelmaterials (von der Behälterinnenseite aus gesehen) sein.

Figur 2 stellt ein weiteres Beispiel eines Deckels (1a) dar, der eine Aufreisslasche (2) enthält und über die Siegellinie (3a) mit dem Behälter verbunden wird. Parallel in kleinem Abstand zur Siegellinie (3a) ist eine Schwächung (4a) z.B. wie oben beschrieben durch eine unterbrochene Linie angedeutet. Die Schwächung (4a) erstreckt sich nur über einen Teilumfang des Deckels und ist beispielhaft gegenüber der Aufreisslasche (2a) über einen Teil des Umfanges unterbrochen. An dieser Stelle setzt der Deckel beim Abreissen vom Behälter einen grösseren Reiss-Widerstand entgegen. Sofern man diesen grösseren Widerstand nicht überwindet, erzielt man einen geöffneten Behälter, dessen Deckel unverlierbar am Behälter verbleibt.

Die Erfindung umfasst auch Behälterabdeckungen, die aus dem erfindungsgemässen Kunststoffverbund hergestellt sind.

Insbesondere die Folie der Schicht a) kann bedruckt und/oder eingefärbt sein.

Aus Gründen der Rezyklierbarkeit und der Verträglichkeit mit dem Füllgut sind die dabei verwendeten Farbstoffe beispielsweise halogen- und insbesondere chlorfrei, sowie möglichst ohne Schwermetalle wie z.B. Cadmium.

Schliesslich umfasst die vorliegende Erfindung ein Verfahren zum Verschliessen von Behältern mittels eines Deckels aus einem mehrschichtigen Kunststoffverbund nach vorliegen-der Erfindung, wobei die Siegelung des Deckels auf den Behälter innerhalb eines Temperaturbereiches von 140°-180°C, eines Druckbereiches von 0,3 bis 0,8 MPa und eines Zeitintervalls zwischen 0,2 bis 1 sec erfolgen.

Es ist erkennbar, dass der Temperaturbereich und der Druckbereich in dem eine Siegelung, beispielsweise eines Deckels auf einen Behälter, möglich ist, sehr gross ist. Damit ist u.a. gewährleistet, dass die Temperatur und Druckregelung für den Siegelvorgang leicht beherrscht werden kann und maschinenseitige Schwankungen der Betriebsbedingungen durch das Material leicht aufgefangen werden können.

Durch die Verträglichkeit der im erfindungsgemässen Kunststoffverbund verwendeten Werkstoffe ist eine volle Rezyklierbarkeit über den Stoff gewährleistet.

Die wirtschaftlich und ökologisch besten Ergebnisse werden bei der Verwendung eines Behälters der mit einem Deckel verschlossen wird, dann erreicht, wenn auch der Behälter auf Basis von Styrol-haltigen Thermoplasten gefertigt ist. Dann können auch Behälter und Deckel gemeinsam rezykliert werden.

## Patentansprüche

1. Mehrschichtiger Kunststoffverbund für Verpackungen, enthaltend von aussen nach innen die Schichten
a) eine Folie in einer Dicke von 8 bis 40 µm, enthaltend einen Thermoplasten auf Ester-Basis,
b) eine Folie in einer Dicke von 20 bis 250 µm, enthaltend einen Thermoplasten auf Styrol-Basis,
c) eine Folie in einer Dicke von 8 bis 40 µm, enthaltend einen Thermoplasten auf Ester-Basis, und
d) eine Siegelschicht in einer Dicke von 5 bis 30 µm, enthaltend einen polystyrolhaltigen Thermoplasten.

2. Mehrschichtiger Kunststoffverbund gemäss Anspruch 1, worin die Folie a) eine Dicke von 10 bis 30 µm aufweist.

3. Mehrschichtiger Kunststoffverbund gemäss Anspruch 1, worin die Folie a) eine Dicke von 10 bis 20 µm aufweist.

4. Mehrschichtiger Kunststoffverbund gemäss Anspruch 1, worin die Folie b) eine Dicke von 80 bis 220 µm aufweist.

5. Mehrschichtiger Kunststoffverbund gemäss Anspruch 1, worin die Folie b) eine Dicke von 80 bis 100 µm resp. 160 bis 220 µm aufweist.

6. Mehrschichtiger Kunststoffverbund gemäss Anspruch 1, worin die Folie c) eine Dicke von 10 bis 30 µm aufweist.

7. Mehrschichtiger Kunststoffverbund gemäss Anspruch 1, worin die Folie c) eine Dicke von 10 bis 15 µm aufweist.

8. Mehrschichtiger Kunststoffverbund gemäss Anspruch 1, worin die Siegelschicht d) eine Dicke von 8 bis 20 µm aufweist.

9. Mehrschichtiger Kunststoffverbund gemäss Anspruch 1, dessen Thermoplast auf Ester-Basis Polyalkylenterephtalate mit Alkylgruppen oder -resten mit 2 bis 10 Kohlenstoffatomen darstellen.

10. Mehrschichtiger Kunststoffverbund gemäss Anspruch 1, dessen Thermoplast auf Ester-Basis ein Polybutylenterephtalat darstellt.

11. Mehrschichtiger Kunststoffverbund gemäss Anspruch 1, dessen Thermoplast auf Styrolbasis ein Copolymerisat von Styrol mit Butadien darstellt.

12. Mehrschichtiger Kunststoffverbund gemäss Anspruch 1, dessen Siegelschicht einen polystyrolhaltigen Thermoplasten enthält und dieser Thermoplast ein Copolymerisat aus Styrol und Butadien darstellt.

13. Mehrschichtiger Kunststoffverbund gemäss Anspruch 1, dessen einzelne Schichten durch Coextrusion miteinander verbunden sind.

14. Mehrschichtiger Kunststoffverbund nach Anspruch 1, enthaltend ein- oder beidseitig wenigstens eine Schwächung oder Schwächungslinie.

15. Mehrschichtiger Kunststoffverbund nach Anspruch 1, und Deckelmaterialien oder Deckel daraus, enthaltend über, parallel, in beliebigen Abständen oder in bestimmten Abständen parallel zur vorgesehenen Verbindungs- oder Siegellinie eine Schwächung oder Schwächungslinie.

16. Verwendung des mehrschichtigen Kunststoffverbundes gemäss Anspruch 1, als Verpackungsmaterial.

17. Verwendung des mehrschichtigen Kunststoffverbundes gemäss Anspruch 16, als Deckelmaterial für behälterförmig ausgestaltete Formkörper.

18. Verwendung des mehrschichtigen Kunststoffverbundes gemäss Anspruch 17, als Deckel für getiefte Behälter.

19. Behälterabdeckung aus einem mehrschichtigen Kunststoffverbund gemäss Anspruch 1.

20. Behälterabdeckung aus einem mehrschichtigen Kunststoffverbund gemäss Anspruch 19, enthaltend wenigstens eine Schwächung oder Schwächungslinie über, parallel in beliebigen Abständen oder in bestimmten Abständen parallel einer vorgesehenen Verbindungs- oder Siegelli nie.

21. Verfahren zum Verschliessen von Behältern mittels eines Deckels aus einem mehrschichtigen Kunststoffverbund gemäss Anspruch 1, dadurch gekennzeichnet, dass die Siegelung des Deckels auf den Behälter innerhalb eines Temperaturbereiches von 140 bis 180°C, eines Druckbereiches von 0,3 bis 0,8 MPa und eines Zeitintervalls von 0,2 bis 1,0 sec erfolgen.

## Claims

1. Multilayered resin composite for packages, comprising, from the outside to inside, the following layers:
a) a film having a thickness of 8 to 40 µm, comprising an ester-based thermoplastic,
b) a film having a thickness of 20 to 250 µm, comprising a styrene-based thermoplastic,
c) a film having a thickness of 8 to 40 µm, comprising an ester-based thermoplastic, and
d) a sealing layer having a thickness of 5 to 30 µm, comprising a polystyrene-containing thermoplastic.

2. Multilayered resin composite according to claim 1, in which the film a) has a thickness of 10 to 30 µm.

3. Multilayered resin composite according to claim 1, in which the film a) has a thickness of 10 to 20 µm.

4. Multilayered resin composite according to claim 1, in which the film b) has a thickness of 80 to 220 µm.

5. Multilayered resin composite according to claim 1, in which the film b) has a thickness of 80 to 100 µm or 160 to 220 µm.

6. Multilayered resin composite according to claim 1, in which the film c) has a thickness of 10 to 30 µm.

7. Multilayered resin composite according to claim 1, in which the film c) has a thickness of 10 to 15 µm.

8. Multilayered resin composite according to claim 1, in which the sealing layer d) has a thickness of 8 to 20 µm.

9. Multilayered resin composite according to claim 1, the ester-based thermoplastic of which consists of polyalkylene terephthalates with alkyl groups or residues with 2 to 10 carbon atoms.

10. Multilayered resin composite according to claim 1, the ester-based thermoplastic of which consists of a polybutylene terephthalate.

11. Multilayered resin composite according to claim 1, the styrene-based thermoplastic of which consists of a styrene/ butadiene copolymer.

12. Multilayered resin composite according to claim 1, the sealing layer of which comprises a polystyrene-containing thermoplastic and this thermoplastic consists of a styrene/ butadiene copolymer.

13. Multilayered resin composite according to claim 1, the individual layers of which are joined together by coextrusion.

14. Multilayered resin composite according to claim 1, comprising at least one area or line of weakness on one or both sides.

15. Multilayered resin composite according to claim 1, and lid materials or lid made therefrom, comprising an area or line of weakness above, parallel with, parallel at any desired intervals with or parallel at specific intervals with the connecting or sealing line provided.

16. Use of the multilayered resin composite according to claim 1 as a packaging material.

17. Use of the multilayered resin composite according to claim 16 as a lid material for container-shaped moulded parts.

18. Use of the multilayered resin composite according to claim 17 as a lid for thermoformed containers.

19. Container cover made from a multilayered resin composite according to claim 1.

20. Container cover made from a multilayered resin composite according to claim 19, comprising at least one area or line of weakness above, parallel at any desired intervals with or parallel at specific intervals with a connecting or sealing line provided.

21. Process for sealing containers by means of a lid made from a multilayered resin composite according to claim 1, characterised in that the lid is sealed to the container within a temperature range of 140 to 180°C, a pressure range of 0.3 to 0.8 MPa and a time interval of 0.2 to 1.0 sec.

## Revendications

1. Composé multicouche en matière plastique pour emballages, contenant, de l'extérieur vers l'intérieur, les couches suivantes :
a) une feuille d'épaisseur comprise entre 8 et 40 µm, contenant une matière thermoplastique à base d'ester,
b) une feuille d'épaisseur comprise entre 20 et 250 µm, contenant une matière thermoplastique à base de styrène,
c) une feuille d'épaisseur comprise entre 8 et 40 µm, contenant une matière thermoplastique à base d'ester, et
d) une couche de scellement d'épaisseur comprise entre 5 et 30 µm, contenant une matière thermoplastique comportant du polystyrène.

2. Composé multicouche en matière plastique selon la revendication 1, dans lequel la feuille a) présente une épaisseur comprise entre 10 et 30 µm.

3. Composé multicouche en matière plastique selon la revendication 1, dans lequel la feuille a) présente une épaisseur comprise entre 10 et 20 µm.

4. Composé multicouche en matière plastique selon la revendication 1, dans lequel la feuille b) présente une épaisseur comprise entre 80 et 220 µm.

5. Composé multicouche en matière plastique selon la revendication 1, dans lequel la feuille b) présente une épaisseur comprise entre 80 et 100 µm, respectivement entre 160 et 220 µm.

6. Composé multicouche en matière plastique selon la revendication 1, dans lequel la feuille c) présente une épaisseur comprise entre 10 et 30 µm.

7. Composé multicouche en matière plastique selon la revendication 1, dans lequel la feuille c) présente une épaisseur comprise entre 10 et 15 µm.

8. Composé multicouche en matière plastique selon la revendication 1, dans lequel la couche de scellement d) présente une épaisseur comprise entre 8 et 20 µm.

9. Composé multicouche en matière plastique selon la revendication 1, dont la matière thermoplastique à base d'ester représente des poly(alkylène téréphtalates) ayant des groupes alkylènes ou des restes alkylènes comportant 2 à 10 atomes de carbone.

10. Composé multicouche en matière plastique selon la revendication 1, dont la matière thermoplastique à base d'ester représente un poly(butylène téréphtalate).

11. Composé multicouche en matière plastique selon la revendication 1, dont la matière thermoplastique à base de styrène représente un produit de copolymérisation de styrène et de butadiène.

12. Composé multicouche en matière plastique selon la revendication 1, dont la couche de scellement contient une matière thermoplastique comportant du polystyrène et cette matière thermoplastique représente un produit de copolymérisation de styrène et de butadiène.

13. Composé multicouche en matière plastique selon la revendication 1, dont les couches individuelles sont liées entre elles par coextrusion.

14. Composé multicouche en matière plastique selon la revendication 1, comportant d'un côté ou sur les deux côtés au moins un affaiblissement ou une ligne d'affaiblissement.

15. Composé multicouche en matière plastique selon la revendication 1, et matériaux pour couvercles ou couvercle en ce dernier, comportant un affaiblisment ou une ligne d'affaiblissement au-delà de la ligne d'assemblage ou de scellement prévue, parallèlement à celle-ci et à des distances quelconques ou parallèlement à celle-ci et à des distances déterminées.

16. Utilisation du composé multicouche en matière plastique selon la revendication 1, comme matériau d'emballage.

17. Utilisation du composé multicouche en matière plastique selon la revendication 16, comme matériau de couvercle pour corps moulés en forme de récipients.

18. Utilisation du composé multicouche en matière plastique selon la revendication 17, comme couvercle pour des récipients emboutis.

19. Couverture de récipient constituée d'un composé multicouche en matière plastique selon la revendication 1.

20. Couverture de récipient constituée d'un composé multicouche en matière plastique selon la revendication 19, comportant au moins un affaiblissement ou une ligne d'affaiblissement au-delà d'une ligne d'assemblage ou de scellement prévue, parallèlement à celle-ci et à des distances quelconques ou parallèlement à celle-ci et à des distances déterminées.

21. Procédé pour la fermeture de récipients à l'aide d'un couvercle constitué d'un composé multicouche en matière plastique selon la revendication 1, caractérisé en ce que le scellement du couvercle sur le récipient se fait dans un domaine de température allant de 140 à 180°C, dans un domaine de pression allant de 0,3 à 0,8 MPa et dans un intervalle de temps allant de 0,2 à 1,0 s.
